# EUROPÄISCHE PATENTSCHRIFT

(11) **EP 1 606 143 B1**
(45) Veröffentlichungstag und Bekanntmachung des Hinweises auf die Patenterteilung: **07.03.2007**
(21) Anmeldenummer: 04719909.6
(22) Anmeldetag: 12.03.2004
(51) Int. Cl.: B60P 7/08, B66C 1/12, B64D 9/00, B65D 19/44

(54) **LUFTFRACHTNETZ**
AIR FREIGHT NET
FILET POUR FRET AERIEN

(30) Priorität: 21.03.2003 DE 10312851; 27.02.2004 DE 202004003234 U
(43) Veröffentlichungstag der Anmeldung: 21.12.2005
(73) Patentinhaber: Hoffmann Air Cargo Equipment GmbH, 61169 Friedberg (DE)
(72) Erfinder: SCHMIDT, Brigitte, 61231 Bad Nauheim (DE); SCHNEIDER, Michael, 61194 Niddatal (DE)
(74) Vertreter: Haar, Lucas Heinz Jörn
(86) Internationale Anmeldenummer: PCT/DE2004/000499
(87) Internationale Veröffentlichungsnummer: WO 2004/082995

(56) Entgegenhaltungen:
- GB-A- 2 338 472
- US-A- 4 000 344

## Beschreibung

Die Erfindung betrifft ein Luftfrachtnetz zur Sicherung von Frachtgut auf einer Palette, dessen Maschen aus miteinander verbundenen Seilsträngen gebildet sind und das ein Mittelfeld, welches zum Auflegen auf das Frachtgut bestimmt ist, und mehrere Seitenfelder aufweist, die sich an den Rand des Mittelfeldes anschließen und zum Bedecken der Seiten des Frachtgutes bestimmt sind, und das mit mehreren Eckleinen versehen ist, die mit einem Ende zwischen den Seitenfeldern an dem Netz befestigt und zum Verbinden benachbarter Ränder der Seitenfelder bestimmt sind.

Luftfrachtnetze der angegebenen Art sind allgemein bekannt, u.a. aus US 4,000,344. Die Seilstränge und Eckleinen der bekannten Netze bestehen in der Regel aus geflochtenen oder gewobenen Seilen aus Kunststoffasern, beispielsweise aus Polyester. Diese Seile sind sehr elastisch und haben eine Bruchdehnung von 10 bis 20 %. Die entsprechend hohe Elastizität der bekannten Netze ist einerseits erwünscht, weil dadurch das Netz nach dem Festzurren eine gewisse Spannung auf die mit ihm verpackte Ladung ausübt und eine begrenzte Volumenänderung der Ladung ausgleichen kann. Sie hat andererseits den Nachteil, daß größere Verzurrwege und dementsprechend längere Verzurrleinen benötigt werden, um die erforderliche Spannung des Netzes zu erreichen, und daß das Netz bei starken Beanspruchungen zu sehr nachgibt und deshalb die Ladung doch Lageveränderungen unterworfen sein kann. Neben den genannten Anforderungen besteht grundsätzlich das Bestreben, Luftfrachtnetze möglichst leicht auszuführen, um den Leergutanteil der Fracht und damit die Transportkosten niedrig halten zu können.

Der Erfindung liegt die Aufgabe zugrunde, ein Luftfrachtnetz der eingangs genannten Art zu schaffen, welches eine gute Lagesicherung des Frachtgutes gewährleistet und sich durch einfache Handhabung beim Verzurren der Fracht und ein geringes Gewicht auszeichnet.

Die Aufgabe wird durch die in Patentanspruch 1 angegebene Erfindung gelöst. Vorteilhafte Ausgestaltungen der Erfindung sind in den Unteransprüchen angegeben.

Bei dem Luftfrachtnetz nach der Erfindung haben die das Mittelfeld und die Seitenfelder bildenden Seilstränge eine geringe Bruchdehnung, vorzugsweise maximal 3 %, die Eckleinen hingegen eine Bruchdehnung von wenigstens dem Dreifachen, insbesondere dem Vierfachen, der Bruchdehnung der Seilstränge, wobei die Bruchlast der Eckleinen wenigstens gleich der Bruchlast der Seilstränge in der Praxis aber vorzugsweise höher als diese ist. Diese Gestaltung des Luftfrachtnetzes hat den Vorteil, daß die von dem Luftfrachtnetz aufzunehmenden und auf die Verankerungen an der Palette zu übertragenden Belastungen erheblich geringere Dehnungen des Netzes hervorrufen, was zu einer verbesserten Lagesicherung des Frachtgutes, insbesondere bei abhebend wirkenden Belastungen führt. Hierbei wurde gefunden, daß mit Hilfe der elastischen Eckleinen eine ausreichende Spannung auf die Ladung ausgeübt werden kann, um die Ladung im wesentlichen spielfrei auf der Palette festzuhalten und gegen Verrutschen zu sichern. Die geringe Elastizität des Netzes hat weiterhin den Vorteil, daß die Verzurrwege relativ klein sind und die erforderliche Anspannung des Netzes schneller erreicht wird. Auch läßt sich eine unzureichende Spannung des Netzes leichter erkennen und durch Anziehen der Eckleinen oder gegebenenfalls zusätzlicher Zurrleinen beseitigen.

Die geringe Bruchdehnung der Seilstränge des Luftfrachtnetzes kann erfindungsgemäß durch Verwendung eines geflochtenen Seiles aus hochfestem Polyethylen, insbesondere einem Seil aus hochgestreckten Fasern aus linearem Polyethylen mit hoher Molmasse zur Herstellung der Seilstränge erreicht werden. Seile aus solchem Material haben bei gleicher Bruchlast ein erheblich geringeres Gewicht und ermöglichen damit auch eine Verringerung des Gewichts des Luftfrachtnetzes. Zudem ist die Abriebfestigkeit von Seilen aus hochfestem Polyethylen hoch und sorgt für eine lange Lebensdauer des Netzes.

Die Eckleinen können erfindungsgemäß aus einem insbesondere geflochtenen Seil aus Polypropylen, Polyester oder Polyamid bestehen, da sich mit diesen Kunststoffen eine geeignet hohe Dehnbarkeit und Bruchlast erzielen läßt. Es können aber auch gewobene Seile aus diesen Kunststoffen verwendet werden.

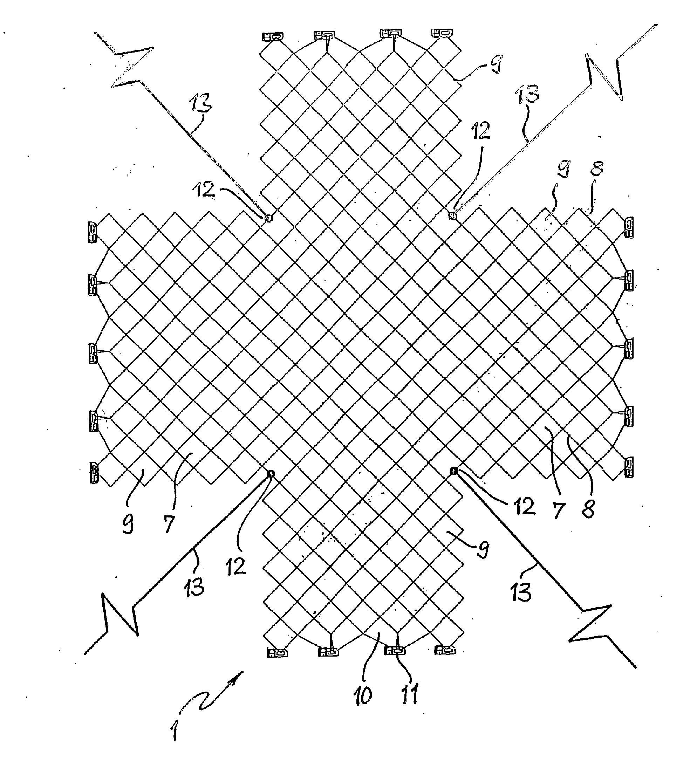

Die Erfindung wird nachfolgend anhand eines in der Zeichnung dargestellten Ausführungsbeispiels näher erläutert.

Das in der Zeichnung dargestellte Luftfrachtnetz 1 hat die Form eines Kreuzes mit einem rechteckigen Mittelfeld 2 und vier rechteckigen Seitenfeldern 3 bis 6, die sich jeweils an eine Seite des Mittelfeldes 2 anschließen. Die Felder des Luftfrachtnetzes 1 bestehen aus einer Vielzahl rechteckiger Maschen 7, die aus durch Spleißen miteinander verbundenen Seilsträngen 8 gebildet sind. Die Seitenfelder 3 bis 6 sind an ihren seitlichen Rändern durch Randmaschen 9 und an ihren äußeren Rändern durch Randmaschen 10 begrenzt. In die Randmaschen 10 sind Befestigungselemente 11 eingehängt, die zur Befestigung des Netzes an einer Luftfrachtpalette dienen. An den vier Ecken 12 des Mittelfeldes 2 ist jeweils eine Eckleine 13 angebracht, die dazu dient, die seitlichen Ränder zweier benachbarter Seitenfelder 3, 4 bzw. 4, 5 bzw. 5, 6 bzw. 6, 3, miteinander zu verbinden. Nachdem das Luftfrachtnetz 1 über das auf einer Palette gestapelte Frachtgut gelegt worden ist, werden hierzu die Eckleinen 13 im Wechsel durch die Randmaschen 9 der benachbarten Ränder der herunterhängenden Seitenfelder 3 bis 6 geschlungen und dann durch Ziehen an ihren freien Enden gespannt. Anschließend werden die Eckleinen 13 im gespannten Zustand mit ihren freien Enden entweder an der Palette oder an dem Luftfrachtnetz 1 befestigt.

Die Seilstränge 8 bestehen bei dem beschriebenen Luftfrachtnetz 1 aus einem geflochtenen Seil aus Kunststoff, der hochgestreckte Fasern aus linearem Polyethylen mit hoher Molmasse aufweist und eine hohe Zugfestigkeit hat. Hohe Molmasse bedeutet hier eine durchschnittliche Molmasse von wenigstens 400 000 g/mol. Lineares Polyethylen bedeutet, daß es weniger als eine Seitenkette je 100 C-Atome, vorzugsweise weniger als eine Seitenkette je 300 C-Atome hat. Das Polyethylen kann außerdem bis zu 5 mol % von einem oder mehreren anderen Alkenen, die damit copolymerisierbar sind, wie Propylen, Buten, Penten, 4-Metylpenten, Okten enthalten. Das Seil hat vorzugsweise eine Bruchfestigkeit von 16kN (3.600 lb) und seine Bruchdehnung beträgt ca. 2,9 %.

Ein solcher Kunststoff wird unter der Bezeichnung Dyneema von der Firma DSM High Performance Fibers B.V. in Heerlin, Niederlande, vertrieben.

Die Eckleinen 13 bestehen vorzugsweise aus einem gewobenen oder geflochtenen Seil aus Polyester, dessen Bruchfestigkeit 20 kN (4.500 lb) beträgt. Das gewobene Seil hat eine Bruchdehnung von ca. 9,1 % und das geflochtene Seil hat eine Bruchdehnung von ca. 12,0 %. Ist eine noch größere Dehnbarkeit der Eckleinen 13 gewünscht, so können diese aus einem gewobenen Seil aus Polyamid mit einer Bruchdehnung von ca. 15 % oder aus Polypropylen mit einer Bruchdehnung von ca. 20 % hergestellt werden.

Die angegebenen Bruchdehnungen werden entsprechen den Meßwerten nach einer Vorbelastung der Seile.

Die beschriebene Gestaltung des Luftfrachtnetzes stellt einen günstigen Kompromiß in Bezug auf sichere Fixierung des Frachtgutes und elastische Anpassung des Netzes an die Außenkontur des Frachtgutes dar und ermöglicht eine erhebliche Reduzierung des Netzgewichtes. Aufgrund der höheren Bruchdehnung des Materials der Eckleinen sind diese bei gleicher Bruchlast dicker als die Seilstränge. Dies erleichtert die Handhabung, z.B. das Durchstecken der Eckleinen durch die Randmaschen und das anschließende Spannen und Befestigen.

## Patentansprüche

1. Luftfrachtnetz zur Sicherung von Frachtgut auf einer Palette, dessen Maschen aus miteinander verbundenen Seilsträngen gebildet sind und das ein Mittelfeld, welches zum Auflegen auf das Frachtgut bestimmt ist, und mehrere Seitenfelder aufweist, die sich an den Rand des Mittelfeldes anschließen und zum Bedecken der Seiten des Frachtgutes bestimmt sind, und das mit mehreren Eckleinen versehen ist, die mit einem Ende zwischen den Seitenfeldern an dem Netz befestigt und zum Verbinden benachbarter Ränder der Seitenfelder bestimmt sind, **dadurch gekennzeichnet, daß** die Bruchdehnung der Eckleinen (13) wenigstens drei mal so groß ist wie die Bruchdehnung der Seilstränge (8), wobei die Bruchlast der Eckleinen (13) wenigstens gleich der Bruchlast der Seilstränge (8) ist.

2. Luftfrachtnetz nach Anspruch 1, **dadurch gekennzeichnet, daß** die Bruchdehnung der Eckleinen (13) wenigstens vier mal so groß ist wie die Bruchdehnung der Seilstränge (8).

3. Luftfrachtnetz nach einem der vorhergehenden Ansprüche, **dadurch gekennzeichnet, daß** die Bruchdehnung der Seilstränge (8) im Bereich von 3 % liegt.

4. Luftfrachtnetz nach einem der vorhergehenden Ansprüche, **dadurch gekennzeichnet, daß** die Seilstränge (8) aus einem geflochtenen Seil aus hochfestem Kunststoff bestehen.

5. Luftfrachtnetz nach Anspruch 4, **dadurch gekennzeichnet, daß** das Seil hochgestreckte Fasern aus linearem Polyethylen mit hoher Molmasse aufweist.

6. Luftfrachtnetz nach einem der vorhergehenden Ansprüche, **dadurch gekennzeichnet, daß** die Eckleinen (13) aus einem insbesondere geflochtenen Seil aus Polyester, Polypropylen oder Polyamid bestehen.

## Claims

1. An aircraft cargo net for securing cargo on a pallet, the mesh of which net is formed from interconnected netting strands, said net having a center panel intended to be laid onto the cargo and a plurality of side panels meeting the edges of the center panel and intended to cover the sides of the cargo, said net further having a plurality of corner ties having one end thereof fastened to the net between the side panels and being provided for the purpose of connecting adjacent edges of the side panels, **characterized in that** the corner ties (13) have a breaking elongation at least three times as high as the breaking elongation of the netting strands (8), with the breaking load of the corner ties (13) being at least equal to the breaking load of the netting strands (8).

2. The aircraft cargo net according to claim 1, **characterized in that** the breaking elongation of the corner ties (13) is at least four times as high as the breaking elongation of the netting strands (8).

3. The aircraft cargo net according to any one of the preceding claims, **characterized in that** the breaking elongation of the netting strands (8) is in the range of 3%.

4. The aircraft cargo net according to any one of the preceding claims, **characterized in that** the netting strands (8) comprise a plaited cord made of a high-strength synthetic material.

5. The aircraft cargo net according to claim 4, **characterized in that** the cord includes high-stretched fibers formed from linear, high molecular weight polyethylene.

6. The aircraft cargo net according to any one of the preceding claims, **characterized in that** the corner ties (13) are made in particular of a plaited cord made of polyester, polypropylene or polyamide.

## Revendications

1. Filet de fret aérien pour la sécurisation de fret sur une palette, dont les mailles sont formées par des brins de corde reliés les uns aux autres et qui est muni d'un champ central destiné à être placé sur le fret et de plusieurs champs latéraux qui se raccordent au bord du champ principal et qui sont destinés à recouvrir les côtés du fret, et qui est muni de plusieurs cordes d'angle qui sont fixées au filet par l'une de leurs extrémités entre les champs latéraux et qui sont destinées à relier des bords voisins des champs latéraux, **caractérisé en ce que** l'allongement à la rupture des cordes d'angle (13) est au moins trois fois supérieur à l'allongement à la rupture des brins de corde (8), la charge de rupture des cordes d'angle étant au moins égale à la charge de rupture des brins de corde (8).

2. Filet de fret aérien selon la revendication 1, **caractérisé en ce que** l'allongement à la rupture des cordes d'angle (13) est au moins quatre fois supérieur à l'allongement à la rupture des brins de corde (8).

3. Filet de fret selon l'une des revendications précédentes, **caractérisé en ce que** l'allongement à la rupture des brins de corde (8) se situe dans le domaine des 3 %.

4. Filet de fret selon l'une des revendications précédentes, **caractérisé en ce que** les brins de corde (8) se composent d'une corde tressée en matière synthétique à haute résistance.

5. Filet de fret selon la revendication 4, **caractérisé en ce que** la corde présente des fibres hautement étirées à base de polyéthylène linéaire ayant une masse molaire élevée.

6. Filet de fret selon l'une des revendications précédentes, **caractérisé en ce que** les cordes d'angle (13) se composent d'une corde, notamment tressée, en polyester, en polypropylène ou en polyamide.
